(19) **Europäisches Patentamt**
**European Patent Office**
**Office européen des brevets**

(11) **EP 2 489 973 B1**

(12) **EUROPEAN PATENT SPECIFICATION**

(45) Date of publication and mention
of the grant of the patent:
**06.01.2016 Bulletin 2016/01**

(21) Application number: **10823422.0**

(22) Date of filing: **13.10.2010**

(51) Int Cl.:
*F28D 20/00* *(2006.01)*    *F28D 20/02* *(2006.01)*

(86) International application number:
**PCT/JP2010/067981**

(87) International publication number:
**WO 2011/046154 (21.04.2011 Gazette 2011/16)**

(54) **HEAT-STORAGE DEVICE**

**WÄRMESPEICHERVORRICHTUNG**

**DISPOSITIF DE STOCKAGE DE CHALEUR**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.10.2009 JP 2009235868**

(43) Date of publication of application:
**22.08.2012 Bulletin 2012/34**

(73) Proprietor: **Kabushiki Kaisha Kobe Seiko Sho
Kobe-shi, Hyogo 651-8585 (JP)**

(72) Inventors:
• **TANAKA, Yuji
Hyogo 651-2271 (JP)**

• **TAKAHASHI, Kazuo
Hyogo 651-2271 (JP)**
• **YAGI, Hiromiki
Hyogo 651-2271 (JP)**

(74) Representative: **TBK
Bavariaring 4-6
80336 München (DE)**

(56) References cited:
**EP-A2- 1 752 728       JP-A- 2005 009 837
JP-A- 2007 132 568    JP-A- 2008 309 344
JP-A- 2010 071 620    US-A- 4 086 958
US-A- 4 088 183         US-A1- 2007 079 951**

Printed by Jouve, 75001 PARIS (FR)

**Description**

[Technical Field]

The present invention relates to a heat-storage device of a direct contact type capable of temporarily storing heat.

[Background Art]

As a technology relating to the heat-storage device of the direct contact type, there is a technology described JP 2005-188 916 A for example. The heat-storage unit (heat-storage device) described in the patent document 1 includes a heat-storage material such as erythritol that stores heat by means of a state change between solid and liquid, a heat exchange medium such as oil that is lower in specific gravity than the heat-storage material, and is not mixed with the heat-storage material, a storage container that stores the heat-storage material and the heat exchange medium, a supply pipe that supplies the inside of the storage container with the heat-exchange medium, and a discharge pipe that discharges the heat-exchange medium to the outside of the storage container.

An extreme end of the supply pipe (provided with supply holes) is located in a bottom portion of a heat-storage material layer in the storage container as shown in FIG. 2 of JP 2005-188 916 A Moreover, an inlet opening of the discharge pipe is located in an oil layer (heat-carrying oil layer) at a top portion in the storage container. The heat exchange medium (heat-carrying oil) is supplied to the heat-storage material layer in the storage container via the supply pipe. The supplied heat-carrying oil is lower in specific gravity than the heat-storage material, and rises in the heat-storage material layer. The heat is transferred from the heat-carrying oil to the heat-storage material (or from the heat-storage material to the heat-carrying oil) by means of the direct contact during this rise. Then, the heat-carrying oil exits to the outside via the discharge pipe. Furthermore, a heat storage device according to the preamble of claim 1 is known from US 2007/079 951 A1. Further heat storage devices are disclosed in EP 1 752 728 A2, JP 2008 309 344 A, US 4 086 958 A and US 4 088 183 A.

[Summary of the Invention]

[Problems to be Solved by the Invention]

However, if a supply flow quantity of the heat-carrying oil to the storage container is large, an upper surface of the heat-storage material layer in the storage container rises, and the heat-storage material may flow out from the discharge pipe to the outside of the heat storage container in the heat-storage device described in JP 2005-188 916 A as detailed later. Though the upper surface of the heat-storage material layer can be prevented from rising by decreasing the supply flow quantity of the heat-carrying oil, high speed input (increase in heat storage speed)/high speed output (increase of heat release speed) of the heat cannot be attained.

(During heat storage)

The heat-storage material layer changes in state from solid to liquid. If the heat-carrying oil is supplied to the heat-storage material layer, bubbles of the heat-carrying oil (oil bubbles) are formed in the heat-storage material layer. Though if the supply flow quantity of the heat-carrying oil is relatively small, a problem is less frequently generated, if the supply flow quantity of the heat-carrying oil is large, the oil bubbles reach an interface (upper surface of the heat-storage material layer) between the heat-storage material layer and the heat-carrying oil layer above thereof, and the oil bubbles subsequently may accumulate without disappearing. As a result, the volume of the heat-storage material layer (apparent volume) extends, the upper surface of the heat-storage material layer rises, and the heat-storage material can possibly flow out from the discharge pipe to the outside of the storage container. It is understood that the level of the discharge pipe is determined considering the quantity of the heat-carrying oil flowing into the heat-storage material layer in the storage container, and the rise of the upper surface level of the heat-storage material layer caused by it. Nonetheless, the heat-storage material may flow out from the discharge pipe to the outside of the storage container. The heat-storage material, which has flown out to the outside of the storage container, is solidified in a circulation pipe for the heat-carrying oil, and blocks the circulation pipe and the like causing a malfunction of a system.

(During heat release)

The heat-storage material may flow out from the discharge pipe to the outside of the storage container also during the heat release as during the heat storage. The heat-storage material layer changes in state from liquid to solid during the heat release. If the heat-carrying oil is supplied to the heat-storage material layer, bubbles of the heat-carrying oil (oil bubbles) are formed in the heat-storage material layer. If the supply flow quantity of the heat-carrying oil is large, the oil bubbles reach the upper surface (interface) of the heat-storage material layer, and the oil bubbles subsequently may accumulate without disappearing. The heat-storage material around the oil bubbles accumulated at the interface solidifies soon, and the oil bubbles come to join together. As a result, the heat-storage material solidified in the vicinity of the interface forms a lid or the like. The heat-storage material remains in the liquid state below the lid, and the formation of the oil bubbles thus continues. These oil bubbles lift up the lid, as a result, the upper surface of the heat-storage material layer rises, and the heat-storage material flows out from the discharge pipe to the outside of the storage container. Though if the supply flow quantity of the heat-carrying oil is relatively small as during the heat storage, this problem is less frequently generated, if the supply flow quantity of the heat-carrying oil increases, there poses a problem that the heat-storage material flows out as described before.

The present invention is devised in view of the above mentioned state, and has an object of providing a heat-storage device having a structure which can prevent more the heat-storage material from flowing to the outside of the heat-storage container than in a conventional case.

[Means for Solving the Problem]

The above object is solved with a heat storage device having the features of claim 1.

As a result of diligent study to solve the above-mentioned problem, the inventors have found that a state in which oil bubbles are hardly formed in a vicinity of an interface between a heat-storage material layer and a heat-carrying oil layer above thereof (referred to as "interface of heat-storage material layer" hereinafter), and bubbles tend to disappear even if they are formed is brought about by providing multiple metal plates or multiple pipes in an up/down direction in the heat-storage material layer so that upper ends thereof are located at a height equal to or more than a vicinity of an upper surface level of the heat-storage-material layer in a bottom portion of a heat-storage container, and this state can solve the above-mentioned problem, and the present invention has been completed based on this knowledge.

In other words, the present invention is a heat-storage device including a heat-storage container that stores a heat-storage material used for latent heat storage, and has a heat-storage material layer containing the heat-storage material, and formed at a bottom portion thereof, a supply pipe that supplies the heat-storage material layer with a heat exchange medium smaller in specific gravity than the heat-storage material from the outside of the heat-storage container into the heat-storage layer, a discharge pipe that discharges the heat exchange medium supplied into the heat-storage material layer to the outside of the heat-storage container, and a plurality of intra-heat-storage-material-layer members that are arranged in an up/down direction in the heat-storage material layer, and are formed by metal plates or pipes, where the intra-heat-storage-material-layer members are arranged so that upper ends of the intra-heat-storage-material-layer members are disposed at a height equal to or more than the vicinity of an upper surface level of the heat-storage material layer.

Moreover, a hole passing through a wall surface of the intra-heat-storage-material-layer member is preferably formed in the present invention.

Further, the present invention includes a perforated plate that is horizontally attached to a lower end portion of the heat-storage container so as to partition the heat-storage container into two spaces delimited in an up/down direction, where a lower end of the supply pipe and the perforated plate are connected with each other, and the heat exchange medium is supplied to the inside of the heat-storage container below the perforated plate via the supply pipe.

[Effects of the Invention]

According to the present invention, the oil bubbles which have reached the vicinity of the interface of the heat-storage material layer are repelled by the upper end portions of the intra-heat-storage-material-layer members, and thus tend to disappear by disposing the multiple intra-heat-storage-material-layer members, which are the components according to the present invention, particularly the metal plates or pipes, in an up/down direction in the heat-storage material layer so that the upper ends thereof are disposed at a height equal to or more than the vicinity of the top surface level of the heat-storage material layer in the bottom portion of the heat storage container. As a result, the state in which the oil bubbles are hardly formed in the vicinity of the interface of the heat-storage material layer, and even if the bubbles are formed, the bubbles tend to disappear is brought about. As a result, the rise of the upper surface of the heat-storage material layer is restrained, and the heat storage material is more prevented from flowing out from the heat storage container than in a conventional case.

[Brief Description of the Drawings]

[FIG. 1] A block diagram showing a heat utilization system provided with a heat storage device according to a first embodiment of the present invention.
[FIG. 2] A lengthwise cross sectional view of the heat storage device shown in FIG. 1.
[FIG. 3] (a) is a cross sectional view made on a plane and in a direction indicated by A in FIG. 2, and (b) is a cross sectional view made on a plane and in a direction indicated by B in FIG. 2.
[FIG. 4] A lengthwise cross sectional view showing a variation of the heat storage device shown in FIG. 2.
[FIG. 5] A lengthwise cross sectional view showing the heat storage device according to a second embodiment of the present invention.
[FIG. 6] (a) is a cross sectional view made on a plane and in a direction indicated by C in FIG. 5, and (b) is a cross sectional view made on a plane and in a direction indicated by D in FIG. 5.
[FIG. 7] A lengthwise partial cross sectional view showing a variation of the heat storage device shown in FIG. 5.
[FIG. 8] (a) and (b) are charts showing performance comparison test results for heat storage and heat release operations.

[Embodiments for Carrying out the Invention]

A description will now be given of embodiments of the present invention referring to drawings. The description is given of an example in which a heat storage device according to the present invention is used as a stationary heat storage device in the following description. The stationary heat storage means heat storage without transfer of heat to the outside, namely in a state in which a heat storage device is always fixed.

(Configuration of heat utilization system)

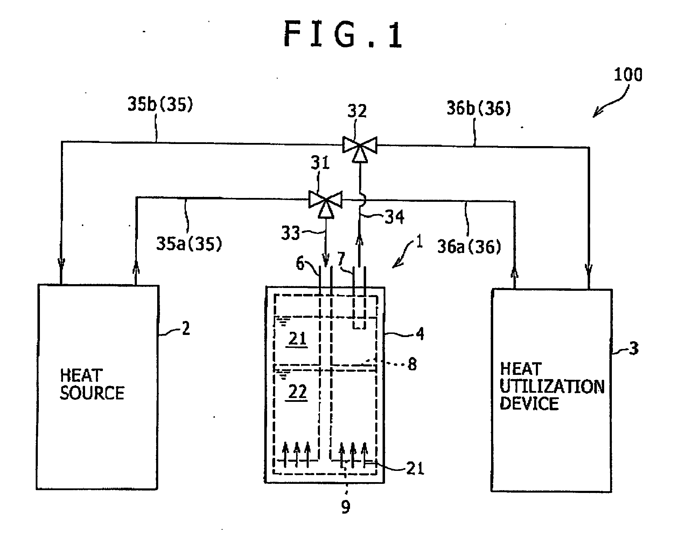

FIG. 1 is a block diagram showing a heat utilization system 100 provided with a heat storage device 1 according to a first embodiment of the present invention. The heat utilization system 100 includes a heat source 2, a heat utilization device 3, and the heat storage device 1 which accumulates heat collected from the heat source 2, and supplies the heat utilization device 3 with the accumulated heat as shown.in FIG. 1.

(Heat source and heat utilization device)

If the heat storage device 1 is fixed (permanently installed) in an iron mill, for example, the heat source 2 is a blast furnace, a converter furnace, a rolling facility, or the like. The heat utilization device 3 is a heated water generation device, an air conditioning facility, or the like in the iron mill.

(Heat storage device) (First embodiment)

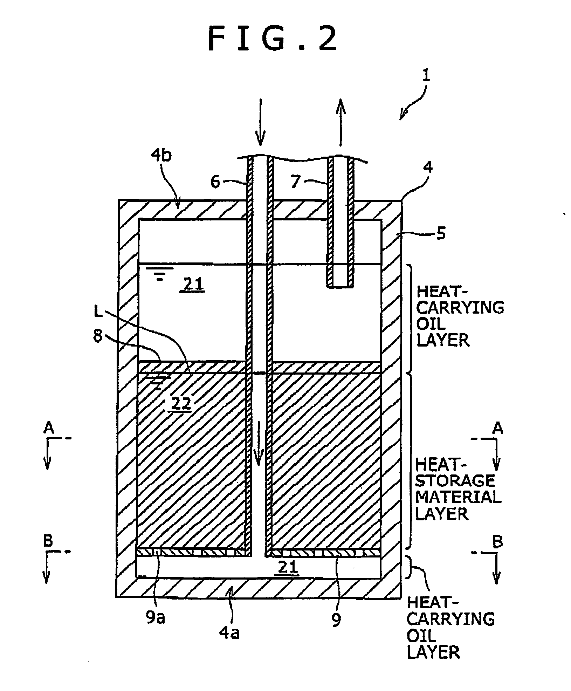

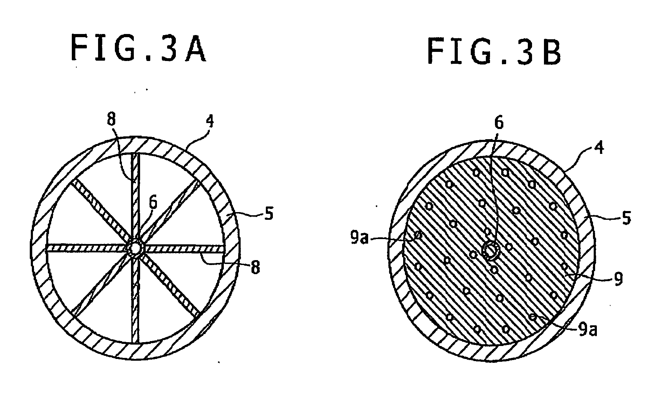

FIG. 2 is a lengthwise cross sectional view of the heat storage device 1 shown in FIG. 1. FIG. 3(a) is a cross sectional view made on a plane and in a direction indicated by A in FIG. 2, and FIG. 3(b) is a cross sectional view made on a plane and in a direction indicated by B in FIG. 2.
As shown in FIGS. 1-3, the heat storage device 1 includes a heat storage container 4 which stores a heat storage material 22 used for latent heat storage, a supply pipe 6 which supplies the inside of the heat storage container 4 with a heat-carrying oil 21 (heat exchange medium), a discharge pipe 7 which discharges the heat-carrying oil 21 to the outside of the heat storage container 4, and multiple metal plates 8 (intra-heat-storage-material-layer members) which are vertically disposed in the heat storage container 4 from an approximately center portion to the lower end portion of the heat storage container 4.

(Heat storage material and heat exchange medium)

As the heat storage material 22, it is preferred to employ a material having a large latent heat (heat of fusion), and sugar alcohols such as erythritol, mannitol, galactitol, and xylitol can be mentioned as this material. For example, erythritol is a material having a melting point: approximately 119°C, and heat of fusion: approximately 340kJ/kg, and mannitol is a material having a melting point: approximately 167°C, and a heat of fusion: approximately 300kJ/kg. It is assumed that erythritol is employed as the heat storage material 22 unless otherwise specified in the following description. Moreover, the heat-carrying oil 21 (heat exchange material) is a material smaller in specific gravity than the heat storage material 22. A material which can maintain a state in which the material is completely separated from the heat storage material 22 is preferably employed as the heat-carrying oil 21, and mineral oil can be mentioned as such a material, for example. It is assumed that mineral oil is employed as the heat-carrying oil 21 unless otherwise specified in the following description.

(Heat storage container)

The heat storage container 4 is a cylindrical container (such a metal container) having a bottom plate portion 4a, and top plate portion 4b. Shapes of the bottom plate portion 4a and the top plate portion 4b are both disk shapes. Moreover, the heat storage container 4 is covered with a heat insulation layer 5. The heat insulation layer 5 may be formed by winding a heat insulation material such as glass wool around the heat storage container 4, the heat insulation layer 5 may be formed by constructing the heat storage container 4 as a double-shell container, and forming the heat insulation layer 5 using a heat insulation material such as glass wool, or the heat insulation layer 5 may be a vacuum heat insulation layer as a method of forming the heat insulation layer 5. Wasteful heat emission to the outside via a wall surface of the heat storage container 4 can be prevented by forming the heat insulation layer 5 around the heat storage container 4, and the heat collected via the heat-carrying oil 21 can be efficiently used to heat the heat utilization device 3. It should be noted that the heat storage container 4 is not limited to the cylindrical shape, and may be a rectangular parallelepiped or cubic shape.
A circular perforated plate 9 is horizontally attached to the lower end portion of the heat storage container 4 so as to partition the inside of the heat storage container 4 into two spaces delimited in an up/down direction. An outer peripheral surface of the perforated plate 9 and an inner wall surface of the heat storage container 4 are brought into contact with each other, and the perforated plate 9 is fixed to the heat storage container 4 by means of welding or the like. A predetermined interval is provided between the bottom plate portion 4a of the heat storage container 4 and the perforated plate 9. Multiple through holes 9a are formed in the perforated plate 9 in the thickness direction thereof. It should be noted that even if the heat storage material 22 is in liquid state, the heat storage material 22 does not move down below the perforated plate 9 due to the surface tensions (surface tensions of the heat storage material 22 and the heat-carrying oil 21) by properly designing the diameter of the through holes 9a of the perforated plate 9. The perforated plate 9 is made of a metal material, for example. When the heat storage container 4 is viewed from above, the perforated plate 9 is disposed across an overall planar cross section (entire surface) in the heat storage container 4 as shown in FIG. 3(b). In other words, the inner diameter of the heat storage container 4 and the outer diameter of the perforated plate 9 are approximately the same.

Though the example in which one perforated plate 9 is placed at a lower end portion of the heat storage container 4 is shown in the present embodiment, a box-shape body including an internal space may horizontally be disposed at (attached to) the lower end portion of the heat storage container 4. In this case, an upper surface (surface on the side of the heat-storage material layer) of the box-shape body is formed into a perforated plate, for example. This box-shape body is preferably disposed across the overall planar cross section (entire surface) of the heat storage container 4. In other words, the inner diameter of the heat storage container 4 and the outer diameter of the box-shape body are preferably approximately equal. Moreover, the heat-carrying oil 21 which has flown through the supply pipe 6 flows through the box-shape body (internal space), and then flows into the heat-storage material layer from the holes of the perforated plate constituting the box-shape body. It should be noted that a bottom surface (surface on the side of the bottom plate portion 4a of the heat storage container 4) of the box-shape body may be a perforated plate. In this case, an interval is formed between the box-shape body and the heat storage container 4, and the heat-carrying oil 21 exiting from the perforated plate of the bottom surface of the box-shape body is fed through the interval to a top portion of the box-shape body

The supply pipe 6 and the discharge pipe 7 are attached to the heat storage container 4. The supply pipe 6 is arranged from above the heat storage container 4 into the inside thereof in the vertical direction so that the center of the top plate portion 4b of the heat storage container 4 is penetrated. A lower end of the supply pipe 6 and the perforated plate 9 are connected with each other at a center portion of the perforated plate 9. The supply pipe 6 is opened inside the heat storage container 4 at the lower end portion of the heat storage container 4. The discharge pipe 7 is arranged from above the heat storage container 4 into the inside thereof in the vertical direction so that the top plate portion 4b of the heat storage container 4 is penetrated. The discharge pipe 7 is opened inside the heat storage container 4 at the top portion of the heat storage container 4.

The layer of the heat storage material 22 (heat-storage material layer) the specific gravity of which is larger than that of the heat-carrying oil 21 is formed in the bottom portion of the heat storage container 4. The layer of the heat-carrying oil 21 (heat-carrying oil layer) which is smaller in specific gravity than the heat storage material 22 is formed above the heat-storage material layer (in the top portion in the heat storage container 4). Moreover, as a result of the supply of the heat-carrying oil 21 from the outside of the heat storage container 4 into the inside thereof via the supply pipe 6, a layer of the heat-carrying oil 21 (heat-carrying oil layer) is formed at the lower end portion of the heat storage container 4 (between the bottom plate portion 4a of the heat storage container 4 and the perforated plate 9). Though the heat-carrying oil 21 is smaller in specific gravity than the heat storage material 22, the heat-carrying oil 21 will not enter the heat-storage material layer due to the surface tensions (surface tensions of the heat storage material 22 and the heat-carrying oil 21) by properly designing the diameter of the through holes 9a of the perforated plate 9 even if the heat-storage material layer (heat storage material 22) is in the liquid state as long as a heat carrier circulation pump (not shown) is not operated.

(Intra-heat-storage-material-layer members)

The multiple metal plates 8 are vertically disposed at the bottom portion in the heat storage container 4 (in the heat-storage material layer formed in the heat storage container 4). The metal plates 8 are disposed so that the direction orthogonal to the thickness direction of the metal plates 8 is the vertical direction. It should be noted that the direction of disposing the metal plates 8 is not necessarily the strictly vertical direction. The direction may be slightly inclined with respect to the vertical direction. In other words, it is only necessary for the metal plates 8 to be disposed in an up/down direction in the heat storage material layer. Moreover, the metal plates 8 may not be formed by a single plate member such as one according to this embodiment, but may be a hollow form (box shape) constructed by combining multiple plate members.

The supply pipe 6 is disposed at the center of the heat storage container 4 when the heat storage container 4 is viewed from above as shown in FIG. 3(a). Eight metal plates 8 are disposed so that the metal plates 8 extend radially from the supply pipe 6 as the center. Side surfaces of the metal plates 8 on the supply pipe 6 side are in contact with an outer peripheral surface of the supply pipe 6, and are fixed to the supply pipe 6 by means of welding or the like. Side surfaces of the metal plates 8 on the heat storage container 4 side are in contact with the inner surface of the heat storage container 4, and are fixed to the heat storage container 4 by means of welding or the like. The bottom portion (heat-storage material layer) of the heat storage container 4 is delimited into eight sectors by the eight metal plates 8. Moreover, lower ends of the metal plates 8 are in contact with an upper surface of the perforated plate 9 as shown in FIG. 2.

Moreover, the metal plates 8 are arranged so that upper ends of the metal plates 8 are located at a position slightly higher than an upper surface level L of the heat-storage material layer as shown in FIG. 2. It should be noted that it is only necessary for the upper ends of the metal plates 8 to be located at a height equal to or more than a vicinity of the upper surface level L of the heat-storage material layer. For example, the upper ends of the metal plates 8 may be located at a position slightly lower than the upper surface level L. However, the upper ends of the metal plates 8 are preferably located at a height equal to or more than the upper surface level L of the heat-storage material layer in order to increase a bubble extinguishing (oil bubble extinguishing) effect by the metal plates 8. Further, the upper ends of the metal plates 8 are preferably located at a position higher than the upper surface level L, namely the metal plates 8 are preferably disposed across the interface of the heat-storage material layer as in this embodiment.

It should be noted that there is brought about a state in which not a small amount of the heat-carrying oil 21 is contained in the heat-storage material layer by the supply of the heat-carrying oil 21 to the heat-storage material layer in the heat storage container 4, and the change in the state (liquid/solid) of the heat-storage material layer caused by this supply. The dimensions of the metal plates 8 are determined so that the upper ends of the metal plates 8 are located at a height equal to or more than a vicinity of the upper surface level L of the heat-storage material layer considering an increase in volume of the heat storage metal layer by the heat-carrying oil 21.

(Heat carrier circulation path)

Pipes 33-36 (heat carrier circulation paths) connect between the heat source 2 and the heat storage device 1, and between the heat storage device 1 and the heat utilization device 3 as shown in FIG. 1. The heat carrier circulation path on the heat source 2 side is constructed by the pipes 33 and 35, and the heat carrier circulation path on the heat utilization device 3 side is constructed by the pipes 33, 34, and 36. The pipe 33 is connected to an upper end of the supply pipe 6 of the heat storage device 1. The pipe 34 is connected to an upper end of the discharge pipe 7 of the heat storage device 1. The pipe 33, the pipe 35a, and the pipe 36a are connected with one another via a three-way valve 31. The pipe 34, the pipe 35b, and the pipe 36b are connected with one another via a three-way valve 32. A heat carrier circulation pump (not shown) is attached to the pipe 34. The heat-carrying oil 21 is circulated either one of the heat carrier circulation path (pipes 33 and 35) on the heat source 2 side and the heat carrier circulation path (pipes 33, 34, and 36) on the heat utilization device 3 side by operating the heat carrier circulation pump. The switching between the circulation on the heat source 2 side and the circulation on the heat utilization device 3 side is carried out by the three-way valves 31 and 32. The three-way valves 31 and 32 are generally electrically operated.

(Operation of heat utilization system)

A description will now be given of an operation of the heat utilization system 100. The operation of the heat utilization system 100 (operation of the heat storage device 1) is roughly separated into a heat storage operation and a heat release operation.

(Heat storage operation)

First, a description is given of the heat storage operation. The three-way valves 31 and 32 are switched (or are confirmed to be in intended states) so that the heat-carrying oil 21 circulates in the heat carrier circulation path (pipes 33 and 35) on the heat source 2 side. The heat carrier circulation pump (not shown) is then started, thereby circulating the heat-carrying oil 21 between the heat storage device 1 and the heat source 2.

The heat-carrying oil 21 flows through the heat source 2, and the heat-carrying oil 21 is consequently heated by the heat from the heat source 2, resulting in the collection of the heat (waste heat) from the heat source 2. The heat-carrying oil 21 heated by the heat source 2 is returned to the heat storage container 4 from the supply pipe 6 via the pipe 35a and the pipe 33. On this occasion, the heat-carrying oil 21 is returned to the heat storage container 4 below the perforated plate 9 via the supply pipe 6. Then, the heat-carrying oil 21 enters from the multiple through holes 9a formed on the perforated plate 9 into the heat-storage material layer. The heat-carrying oil 21 rises (floats upward) in the heat storage container 4 due to a difference in specific gravity between the heat storage material 22 and the heat-carrying oil 21 in the form of the oil bubbles while the heat-carrying oil 21 supplies the heat storage material 22 with the heat (exchanges heat with the heat storage material 22) by the direct contact with the heat storage material 22. The heat-carrying oil 21 rises (floats upward) in the gaps delimited into the sectors between the eight metal plates 8. The heat-carrying oil 21 then reaches the layer of the heat-carrying oil 21 (heat-carrying oil layer) formed above the heat storage material 22.

The heat-carrying oil 21 which has reached the heat-carrying oil layer, and has released the heat is sucked from the discharge pipe 7 by the heat carrier circulation pump (not shown) for being heated again by the heat source 2, and is supplied again to the heat source 2 via the pipe 34 and the pipe 35b. The heat-storage material layer changes in state from solid to liquid during the heat storage operation.

(Heat release operation)

A description will now be given of the heat release operation. The three-way valves 31 and 32 are switched so that the heat-carrying oil 21 circulates through the heat carrier circulation path (pipes 33, 34, and 36) on the heat utilization device 3 side. The heat carrier circulation pump (not shown) is then started, thereby circulating the heat-carrying oil 21 between the heat storage device 1 and the heat utilization device 3.

When the heat-carrying oil 21 in the heat storage container 4 enters the heat utilization device 3, the heat is removed from the heat-carrying oil 21. The heat-carrying oil 21 the heat of which has been removed by the heat utilization device 3 is returned to the heat storage container 4 from the supply pipe 6 via the pipe 36a and the pipe 33. On this occasion, the heat-carrying oil 21 is returned to the heat storage container 4 below the perforated plate 9 via the supply pipe 6. Then, the heat-carrying oil 21 enters from the multiple through holes 9a formed on the perforated plate 9 into the heat-storage material layer.

A layer of the heat-carrying oil in contact with the entire bottom surface of the perforated plate 9 is formed between the bottom plate portion 4a of the heat storage container 4 and the perforated plate 9 (below the perforated plate 9). As a result, the heat exchange by the heat transmission via the perforated plate 9 is promoted.

The heat-carrying oil 21 rises (floats upward) in the heat storage container 4 due to the difference in specific gravity between the heat storage material 22 and the heat-carrying oil 21 in the form of the oil bubbles while the heat-carrying oil 21 receives the heat from the heat storage material 22 (exchanges heat with the heat storage material 22) by the direct contact with the heat storage material 22. The heat-carrying oil 21 rises (floats upward) in the gaps delimited into the sectors between the eight metal plates 8. The heat-carrying oil 21 then reaches the layer of the heat-carrying oil 21 (heat-carrying oil layer) formed above the heat storage material 22.

The heat-carrying oil 21 which has reached the heat-carrying oil layer, and has received the heat is sucked from the discharge pipe 7 by the heat carrier circulation pump (not shown), and is supplied again to the heat utilization device 3 via the pipe 34 and the pipe 36b. The heat-storage material layer changes in state from liquid to solid during the heat release operation.

As the description has been given of the heat storage device 1 while the description is being given of the heat utilization system 100 provided with the heat storage device 1 according to the present invention, the heat-storage material layer is brought into the state in which the heat-storage material layer is delimited into the multiple portions by vertically disposing the multiple metal plates 8 (intra-heat-storage-material-layer members) in the heat-storage material layer in the heat storage container 4 by means of the heat storage device 1. The oil bubbles which have reached the vicinity of the interface of the heat-storage material layer are repelled by the upper end portions of the metal plates 8 and tend to disappear by locating the upper ends of the metal plates 8 at a height equal to or more than the vicinity of the upper surface level L of the heat-storage material layer. As a result, there is brought about the state in which oil bubbles are hardly formed in the vicinity of the interface of the heat-storage material layer, and tend to disappear even if the oil bubbles are formed, resulting in the restraint of the rise of the upper surface of the heat-storage material layer. In other words, a separation property between the heat-carrying oil 21 and the heat storage material 22 increases at the interface of the heat-storage material layer. This prevents more the heat storage material 22 from flowing to the outside of the heat storage container 4 than in a conventional case. Moreover, this can increase the quantity of the heat-carrying oil 21 supplied into the heat storage container 4 compared with the conventional case, resulting in heat exchange at a higher speed.

Moreover, the solidification of the heat storage material 22 starts from portions along the metal plates 8 during the heat release operation (heat transfer from the heat storage material 22 to the heat-carrying oil 21 in the heat storage container 4). The heat-carrying oil 21 lower in temperature than the heat storage material 22 enters into the heat storage container 4 below the perforated plate 9 via the supply pipe 6. On this occasion, the supply pipe 6 and the perforated plate 9 are cooled by the heat-carrying oil 21. The metal plates 8 are in contact with the supply pipe 6 and the perforated plate 9, and the metal plates 8 are also cooled by the supply pipe 6 and the perforated plate 9 being cooled by the heat-carrying oil 21. As a result, the solidification of the heat storage material 22 starts from the portions along the metal plates 8 during the heat release operation. Flow passages of the heat-carrying oil 21 are secured in an up/down direction (along the floating direction of the heat-carrying oil 21) between the metal plates 8 by the solidification of the heat storage material 22 starting from the portions along the metal plates 8. This also prevents the heat-storage material layer from swelling upward, thereby preventing the upper surface of the heat-storage material layer from rising even if the flow quantity of the heat-carrying oil 21 supplied into the heat storage container 4 increases. This prevents the heat storage material 22 from flowing to the outside of the heat storage container 4.

(Variation)

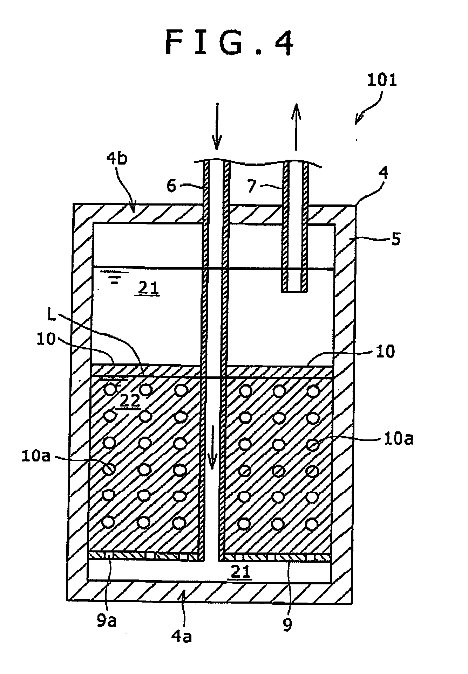

FIG. 4 is a lengthwise cross sectional view showing a variation of the heat storage device 1 shown in FIG. 2. It should be noted that like components are denoted by like numerals as of the heat storage device 1 shown in FIG. 2 in a heat storage device 101 according to the variation in FIG. 4.

Multiple through holes 10a are formed in the thickness direction on the side surfaces of metal plates 10 (intra-heat-storage-material-layer members) of the heat storage device 101 as shown in FIG. 4. This point is different from the metal plates 8 of the heat storage device 1. The metal plates 8 of the heat storage device 1 and the metal plates 10 of the heat storage device 101 according to this variation are the same in shape, arrangement, and number except for the fact that the multiple holes are formed on the side surfaces of the metal plates. The hole 10a is larger than the through holes 9a of the perforated plate 9.

The shape of the holes 10a is not limited to a circle, and may be in another shape such as a rectangle. However, the metal plates 10 are used under a severe temperature condition, and repeatedly receive thermal stress. On the other hand, the circular hole 10a does not have a corner, and the stress hardly concentrates. Thus, the circular hole 10a can prevent the metal plate 10 from being damaged. In other words, the forming circular hole 10a is preferred.

Contact area between the metal plates 10 and the heat storage material 22 is increased by forming multiple holes 10a passing through the metal plates 10, and a solidified quantity of the heat storage material 22 starting from the portions along the metal plates 10 thus increases during the heat release operation. As a result, more flow passages for the heat-carrying oil 21 are secured in the heat-storage material layer in an up/down direction (along the floating direction of the heat-carrying oil 21).

Moreover, the holes 10a cause the neighboring sections to communicate with each other. As a result, the holes 10a constitute escape routes for the rising heat-carrying oil 21, thereby further preventing the heat-storage material layer from swelling upward.

(Second embodiment)

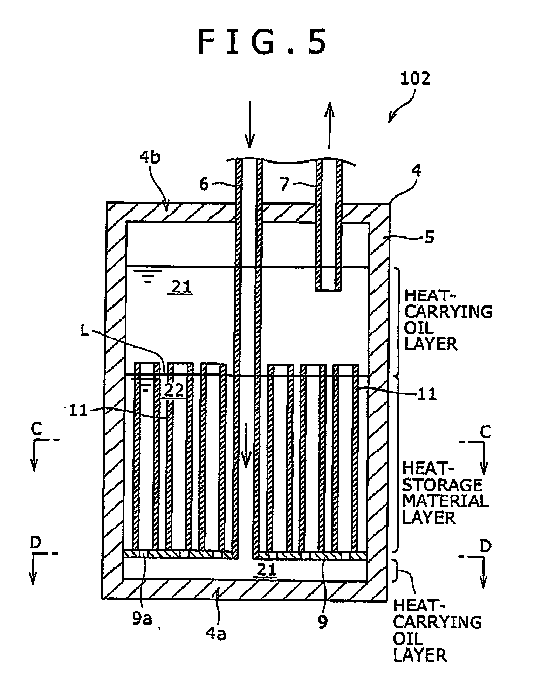

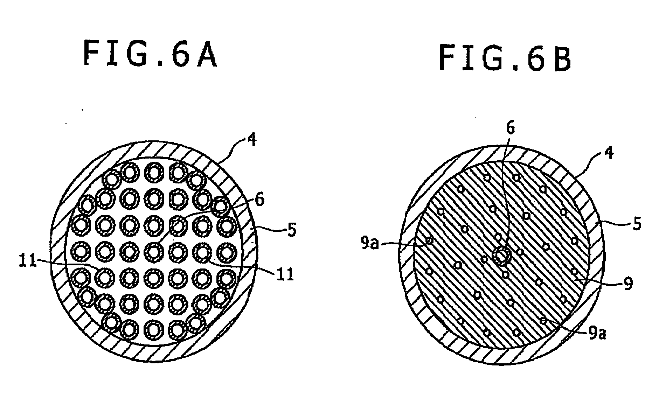

FIG. 5 is a lengthwise cross sectional view showing a heat storage device 102 according to a second embodiment of the present invention. FIG. 6(a) is a cross sectional view made on a plane and in a direction indicated by C in FIG. 5, and FIG. 6(b) is a cross sectional view made on a plane and in a direction indicated by D in FIG. 5. Like components are denoted by like numerals as of the heat storage device 1 according to the first embodiment shown in FIG. 2 in the description of this embodiment.

A different point between the heat storage device 102 according to this embodiment and the heat storage device 1 according to the first embodiment is the intra-heat-storage-material-layer members as shown in FIG. 5 and FIG. 6.

Multiple cylindrical circular pipes 11 (intra-heat-storage-material-layer members) are disposed in the vertical direction in a bottom portion (in the heat-storage material layer formed in the heat storage container 4) of the heat storage container 4. The circular pipes 11 are disposed so that the lengthwise direction orthogonal to the radial direction of the circular pipes 11 is the vertical direction. It should be noted that the direction of the arrangement of the pipes 11 may not be strictly vertical direction. The direction may be slightly inclined with respect to the vertical direction. In other words, it is only necessary for the circular pipes 11 to be disposed in an up/down direction in the heat-storage material layer. Moreover, both ends of the circular pipes 11 are opened.

When the heat storage container 4 is viewed from above, the supply pipe 6 is disposed at the center of the heat storage container 4 as shown in FIG. 6(a). The multiple circular pipes 11 are disposed around the supply pipe 6. The bottom portion (heat-storage material layer) of the heat storage container 4 is partitioned into smaller sections by the multiple circular pipes 11. Moreover, the lower ends of the circular pipes 11 are brought into contact with the upper surface of the perforated plate 9 as shown in FIG. 5. It should be noted that the through holes 9a are formed so that the through holes 9a are disposed outside and inside the circular pipes 11 if the heat storage container 4 is viewed from above.

Moreover, the circular pipes 11 are disposed so that the upper ends of the circular pipes 11 are located at a position slightly higher than the upper surface level L of the heat storage material layer as shown in FIG. 5. It should be noted that it is only necessary for the top ends of the circular pipes 11 to be located at a height equal to or more than a vicinity of the upper surface level L of the heat-storage material layer. For example, the top ends of the circular pipes 11 may be located at a position slightly lower than the upper surface level L. However, the upper ends of the circular pipes 11 are preferably located at a height equal to or more than the upper surface level L of the heat-storage material layer in order to increase the bubble extinguishing (oil bubble extinguishing) effect by the circular pipes 11. Further, the upper ends of the circular piles 11 are preferably located at a position higher than the upper surface level L, namely, the circular pipes 11 are preferably disposed so as to cross the interface of the heat-storage material layer as in this embodiment.

It should be noted that there is brought about a state in which not a small amount of the heat-carrying oil 21 is contained in the heat-storage material layer by the supply of the heat-carrying oil 21 to the heat-storage material layer in the heat storage container 4, and the change in the state (liquid/solid) of the heat-storage material layer caused by this supply. The dimensions of the circular pipes 11 are determined so that the upper ends of the circular pipes 11 are located at a height equal to or more than the upper surface level L of the heat-storage material layer considering an increase in volume of the heat-storage material layer by the heat-carrying oil 21.

The heat storage device 102 brings about the state in which the heat-storage material layer is partitioned into the multiple sections by vertically disposing the multiple circular pipes 11 (intra-heat-storage-material-layer members) in the heat-storage material layer in the heat storage container 4. The oil bubbles which have reached the vicinity of the interface of the heat-storage material layer are repelled by the upper end portions of the circular pipes 11 and tend to disappear by locating the upper ends of the circular pipes 11 at a height equal to or more than the vicinity of the upper surface level L of the heat-storage material layer. As a result, there is brought about the state in which oil bubbles are hardly formed in the vicinity of the interface of the heat-storage material layer, and tend to disappear even if the oil bubbles are formed, resulting in the restraint of the rise of the upper surface of the heat-storage material layer. In other words, a separation property between the heat-carrying oil 21 and the heat storage material 22 increases at the interface of the heat-storage material layer. This prevents more the heat storage material 22 from flowing to the outside of the heat storage container 4 than in a conventional case. Moreover, this can increase the flow quantity of the heat-carrying oil 21 supplied into the heat storage container 4 compared with the conventional case, resulting in heat exchange at a higher speed.

Moreover, any of the multiple circular pipes 11 are in contact with the perforated plate 9. As a result, flow passages of the heat-carrying oil 21 are secured in an up/down direction (along the floating direction of the heat-carrying oil 21) by the multiple circular pipes 11 in the heat storage container 4 as mentioned in the description of the first embodiment. As a result, even if the flow quantity of the heat-carrying oil 21 supplied into the heat storage container 4 increases, this prevents the heat storage material 22 from flowing to the outside of the heat storage container 4. The circular pipe 11 is preferably made of a material high in heat conductivity, namely, the material of the circular pipes 11 is preferably metal such as stainless steel.

It should be noted that the pipe may not be the circular pipe 11, and may be a rectangular pipe the cross sectional shape of which is a rectangle, for example. However, the pipes (intra-heat-storage-material-layer members) of the heat storage container 4 are used under a severe temperature condition, repeatedly receive thermal stress, and are preferably formed into the circular pipes 11 in which the stress hardly concentrates.

(Variation)

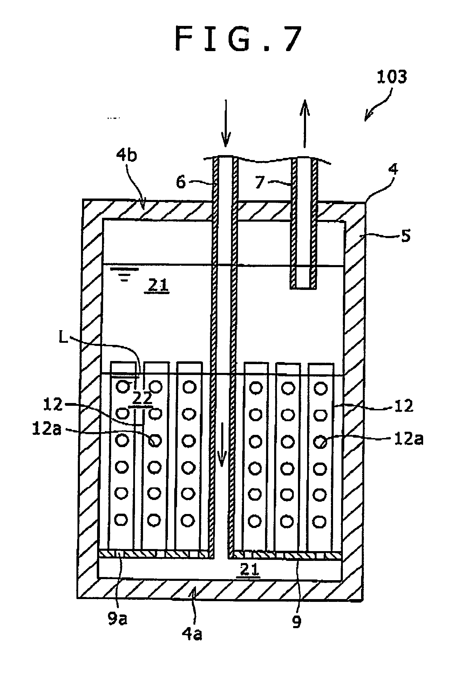

FIG. 7 is a partial lengthwise cross sectional view showing a variation of the heat storage device 102 shown in FIG. 5. It should be noted that like components are denoted by like numerals as of the heat storage device 102 shown in FIG. 5 in a heat storage device 103 according to the variation in FIG. 7.

Circular through holes 12a are formed passing through wall surfaces of the circular pipes 12 (intra-heat-storage-material-layer members) of the heat storage device 103 in a line in the lengthwise direction thereof as shown in FIG. 7. This point is different from the circular pipes 11 of the heat storage device 102. The circular pipes 11 of the heat storage device 102 and the circular pipes 12 of the heat storage device 103 according to this variation are the same in shape, arrangement, and number except for the fact that the multiple holes are formed on the circular pipes. It should be noted that the holes 12a may be formed in two or more lines on the circular pipes 12, or may be disposed in a staggered manner. The hole 12a is larger than the through holes 9a of the perforated plate 9.

The shape of the holes 12a is not limited to a circle, and may be other shapes such as a rectangle. However, the circular pipes 12 are used under a severe temperature condition, and repeatedly receive thermal stress. On the other hand, the circular hole 12a does not have a corner, and the stress hardly concentrates. Thus, the circular hole 12a can prevent the circular pipes 12 from being damaged. In other words, the forming circular hole 12a is preferred.

Contact area between the circular pipes 12 and the heat storage material 22 is increased by forming multiple holes 12a in the circular pipes 12, thereby a solidified quantity of the heat storage material 22 starting from the portions along the circular pipes 12 increases during the heat release operation. As a result, more flow passages for the heat-carrying oil 21 are secured in the heat-storage material layer in an up/down direction (along the floating direction of the heat-carrying oil 21).

Moreover, the holes 12a communicate the inside of the circular pipes 12 and the outside of the circular pipes 12 with each other. As a result, the holes 12a constitute escape routes for the rising heat-carrying oil 21, thereby further preventing the heat-storage material layer from swelling upward.

(Example)

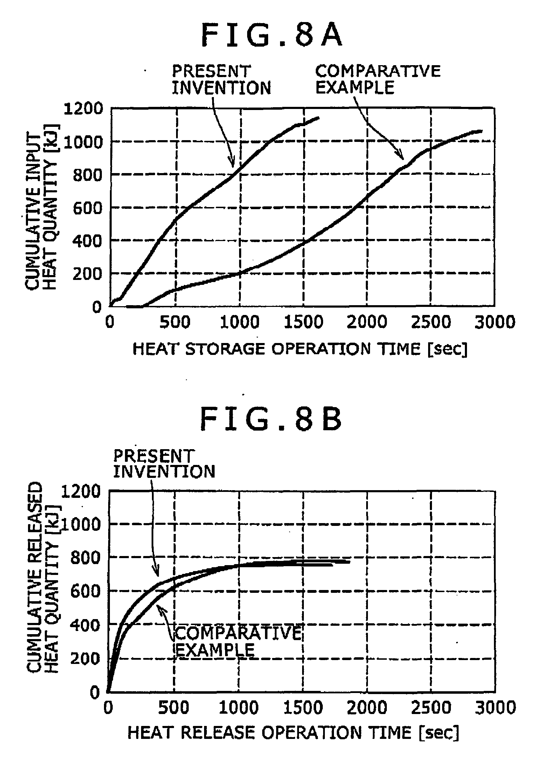

FIGS. 8(a) and (b) are charts showing performance comparison test results for the heat storage and heat release operations. FIG. 8(a) shows a performance comparison test result during the heat storage operation, and FIG. 8(b) shows a performance comparison test result during the heat release operation. A test result of the heat storage device according to the present invention was brought about by the heat storage device 102 having the structure shown in FIG. 5, and a test result of the heat storage device relating to a comparative example is brought about by a heat storage device without the circular pipes 11.

A cumulative input heat quantity (or cumulative released heat quantity) Q (kJ) assigned to the vertical axis of the charts is obtained by the following equation.

$$Q = \Sigma(m \times Cp \times \Delta T)$$

m: flow quantity of heat-carrying oil (kg/sec)
Cp: Specific heat of heat-carrying oil (kJ/kg°C)
$\Delta T$: Difference in temperature of heat-carrying oil between at the entrance and at the exit of heat storage container

(Heat storage operation test result)

The heat storage device according to the present invention could store heat of 1135kJ for approximately 27 minutes as shown in FIG. 8(a). It should be noted that the internal temperature of the heat storage device rose from 8°C to 140°C. On the other hand, the heat storage quantity was 1057kJ for approximately 48 minutes for the heat storage device according to the comparative example. In the heat storage device of the comparative example, if the supplied flow quantity m of the heat-carrying oil is increased, the oil bubbles accumulate at the interface of the heat-storage material layer, the upper surface of the heat-storage material layer rises, and the supplied flow quantity m of the heat-carrying oil could not be increased. In contrast, in the heat storage device according to the present invention, the oil bubbles hardly be generated in a vicinity of the interface of the heat-storage material layer (separation property between the heat-carrying oil and the heat storage material at the interface of the heat-storage material layer is excellent), and the supplied flow quantity m of the heat-carrying oil could be increased compared with the heat storage device of the comparative example. As a result, the heat storage device according to the present invention could store heat at a higher speed.

(Heat release operation test result)

As appreciated from a test result in a vicinity of a heat release operation time 250 (sec) in FIG. 8(b), the heat release operation could start faster if the heat storage device according to the present invention was used. Moreover, the cumulative heat release quantity until approximately 25 minutes after the start of the heat release was 782kJ if the heat storage device according to the present invention was used, while that was 760kJ if the heat storage device of the comparative example was used. The difference therebetween was caused by a larger supply flow quantity m of the heat-carrying oil realized by the heat storage device according to the present invention as in the heat storage operation test. It should be noted that the internal temperature of the heat storage device according to the present invention decreased from 110°C to 35°C.

The description has been given of the embodiments of the present invention, and the present invention is not limited to the above-mentioned embodiments, and can be changed in various ways, and can be embodied within the scope of claims.

The present application is based on Japanese Patent Application Laid-open No. 2009-235868 filed on October 13, 2009.

[Industrial applicability]

The heat storage device according to the present invention is a device which can be applied to utilities such as the stored heat transport. Refer to the patent document 1 (Japanese Patent Application Laid-open No. 2005-188916) as an example of the stored heat transport. The heat storage device according to the present invention can be used as a device for transporting waste heat generated in an iron mill and an incineration plant to a heated swimming pool, an air conditioner (such as a heating facility for a building), and a public bath. Heat sources are waste heat generated in an iron mill and an incineration plant and cogeneration waste heat, and the heat utilizing destinations are a heated swimming pool, an air conditioner (such as a heating facility for a building), a public bath for the stored heat transport.

Further, the heat storage device according to the present invention can be used for warming up engines of motor vehicles (including passenger vehicles and construction vehicles). If the heat storage device according to the present invention is used as a heat storage device for warming up an engine, the heat storage device is to be mounted on a motor vehicle. The heat source thereof is waste heat of the engine, and the heat is used for the engine (for warming up the engine).

[Description of the Numerals]

1: Heat storage device
2: Heat source
3: Heat utilization device
4: Heat storage container
6: Supply pipe
7: Discharge pipe
8: Metal plate (intra-heat-storage-material-layer member)
21: Heat-carrying oil (heat exchange medium)
22: Heat storage material
100: Heat utilization system

**Claims**

1. A heat storage device (1) comprising:

a heat-storage container (4) that stores a heat-storage material (22) used for latent heat storage, and has a heat-storage material layer containing the heat-storage material (22), and formed at a bottom portion thereof;
a supply pipe (6) that supplies the heat-storage material layer with a heat exchange medium (21) smaller in specific gravity than the heat-storage material (22) from the outside of said heat-storage container (4) into the heat-storage layer;
a discharge pipe (7) that discharges the heat exchange medium (21) supplied into the heat-storage material layer to the outside of said heat-storage container (4); and

a plurality of intra-heat-storage-material-layer members that are arranged in an up/down direction in the heat-storage material layer, and are formed by metal plates (8; 10) or pipes (11; 12),

wherein said intra-heat-storage-material-layer members are arranged so that upper ends of said intra-heat-storage-material-layer members are disposed at a height equal to or more than a vicinity of an upper surface level of the heat-storage material layer, **characterized in that** the heat-storage device comprises a perforated plate (9) that is horizontally attached to a lower end portion of said heat-storage container (4) so as to partition said heat-storage container (4) into two spaces delimited in an up/down direction, wherein:

a lower end of said supply pipe (6) and said perforated plate (9) are connected with each other such that

the heat exchange medium (21) can be supplied to the inside of said heat-storage container (4) below said perforated plate (9) via said supply pipe (6), and

when said intra-heat-storage-material-layer members are formed by metal plates (8; 10), the metal plates (8; 10) are in contact with the supply pipe (6) and the perforated plate (9), and

when said intra-heat-storage-material-layer members are formed by pipes (11; 12), the pipes (11; 12) are in contact with the perforated plate (9) and through holes (9a) of the perforated plate (9) are disposed outside and inside the pipes (11; 12).

2. The heat-storage device according to claim 1, wherein a hole (10a; 12a) passing through a wall surface of said intra-heat-storage-material-layer member is formed.

**Patentansprüche**

1. Wärmespeichervorrichtung (1) mit:

einem Wärmespeicherbehälter (4), der ein als Latentwärmespeicher verwendetes Wärmespeichermaterial (22) speichert und der eine Wärmespeichermaterialschicht hat, die das Wärmespeichermaterial (22) enthält und an einem Bodenabschnitt davon ausgebildet ist; einem Versorgungsrohr (6), das die Wärmespeichermaterialschicht mit einem Wärmeaustauschmedium (21), dessen relative Dichte kleiner als die des Wärmespeichermaterials (22) ist, von der Außenseite des Wärmespeicherbehälters (4) in die Wärmespeicherschicht versorgt; einem Abgaberohr (7), das das in die Wärmespeichermaterialschicht zugeführte Wärmeaustauschmedium (21) zu der Außenseite des Wärmespeicherbehälters (4) abgibt; und einer Vielzahl von Zwischenwärmespeichermaterialschichtelementen, die in einer Oben-Unten-Richtung in der Wärmespeichermaterialschicht angeordnet sind und die durch Metallplatten (8; 10) oder Rohre (11; 12) ausgebildet sind,

wobei die Zwischenwärmespeichermaterialschichtelemente so angeordnet sind, dass obere Enden der Zwischenwärmespeichermaterialschichtelemente auf einer Höhe angeordnet sind, die gleich wie oder höher als eine Umgebung eines Oberflächenniveaus der Wärmespeichermaterialschicht ist, **dadurch gekennzeichnet, dass**

die Wärmespeichervorrichtung eine perforierte Platte (9) aufweist, die an einem unteren Endabschnitt des Wärmespeicherbehälters (4) horizontal angebracht ist, sodass sie den Wärmespeicherbehälter (4) in zwei in einer Oben-Unten-Richtung abgegrenzte Räume unterteilt, wobei

ein unteres Ende des Zuführrohrs (6) und die perforierte Platte (9) derart miteinander verbunden sind, dass

das Wärmeaustauschmedium (21) über das Zuführrohr (6) zu der Innenseite des Wärmespeicherbehälters (4) unter die perforierte Platte (9) zugeführt werden kann, und

wobei dann, wenn die Zwischenwärmespeichermaterialschichtelemente durch die Metallplatten (8; 10) ausgebildet sind, die Metallplatten (8; 10) mit dem Zuführrohr (6) und der perforierten Platte (9) in Kontakt sind, und

wobei dann, wenn die Zwischenwärmespeichermaterialschichtelemente durch Rohre (11; 12) ausgebildet sind, die Rohre (11; 12) mit der perforierten Platte (9) in Kontakt sind und Durchgangslöcher (9a) der perforierten Platte (9) außerhalb und innerhalb der Rohre (11; 12) angeordnet sind.

2. Wärmespeichervorrichtung gemäß Anspruch 1, wobei ein Loch (10a; 12a) ausgebildet ist das durch eine Wandfläche des Zwischenwärmespeichermaterialschichtelements hindurchführt.

**Revendications**

1. Dispositif d'accumulation de chaleur (1) comprenant :

un récipient d'accumulation de chaleur (4) qui stocke un matériau d'accumulation de chaleur (22) utilisé pour l'accumulation de chaleur latente, et a une couche de matériau d'accumulation de chaleur contenant le matériau d'accumulation de chaleur (22), et formé au niveau d'une partie inférieure de celui-ci ;

un tuyau d'alimentation (6) qui alimente la couche de matériau d'accumulation de chaleur avec un milieu d'échange de chaleur (21) de densité inférieure à celle du matériau d'accumulation de chaleur (22) depuis l'extérieur dudit récipient d'accumulation de chaleur (4) dans la couche d'accumulation de chaleur ;

un tuyau d'évacuation (7) qui évacue le milieu d'échange de chaleur (21) alimentant la couche de matériau d'accumulation de chaleur vers l'extérieur dudit récipient d'accumulation de chaleur (4) ; et

une pluralité d'éléments dans la couche de matériau d'accumulation de chaleur qui sont agencés dans une direction haut/bas dans la couche de matériau d'accumulation de chaleur, et sont formés par des plaques métalliques (8 ; 10) ou des tuyaux (11 ; 12),

dans lequel lesdits éléments dans la couche de matériau d'accumulation de chaleur sont agencés de sorte que des extrémités supérieures desdits éléments dans la couche de matériau d'accumulation de chaleur soient disposées à une hauteur supérieure ou égale à un voisinage d'un niveau de surface supérieure de la couche de matériau d'accumulation de chaleur, **caractérisé en ce que**

le dispositif d'accumulation de chaleur comprend une plaque perforée (9) qui est fixée horizontalement à une partie d'extrémité inférieure dudit récipient d'accumulation de chaleur (4) de manière à diviser ledit récipient d'accumulation de chaleur (4) en deux espaces délimités dans une direction haut/bas, dans lequel :

une extrémité inférieure dudit tuyau d'alimentation (6) et ladite plaque perforée (9) sont reliées l'une à l'autre de sorte que le milieu d'échange de chaleur (21) puisse alimenter l'intérieur dudit récipient d'accumulation de chaleur (4) en dessous de ladite plaque perforée (9) par l'intermédiaire dudit tuyau d'alimentation (6), et

lorsque lesdits éléments dans la couche de matériau d'accumulation de chaleur sont formés par des plaques métalliques (8 ; 10), les plaques métalliques (8 ; 10) soient en contact avec le tuyau d'alimentation (6) et la plaque perforée (9), et

lorsque lesdits éléments dans la couche de matériau d'accumulation de chaleur sont formés par des tuyaux (11 ; 12), les tuyaux (11 ; 12) soient en contact avec la plaque perforée (9) et des trous traversants (9a) de la plaque perforée (9) soient disposés à l'extérieur et à l'intérieur des tuyaux (11 ; 12).

2. Dispositif d'accumulation de chaleur selon la revendication 1, dans lequel un trou (10a ; 12a) traversant une surface de paroi dudit élément dans la couche de matériau d'accumulation de chaleur est formé.

# FIG.1

EP 2 489 973 B1

# FIG.2

HEAT-
CARRYING
OIL
LAYER

HEAT-
STORAGE
MATERIAL
LAYER

HEAT-
CARRYING
OIL
LAYER

FIG.3A

FIG.3B

EP 2 489 973 B1

# F I G . 4

# FIG.5

102

4b

6

7

4

5

21

HEAT-
CARRYING
OIL
LAYER

L

22

11

11

C

C

D

D

HEAT-
STORAGE
MATERIAL
LAYER

V

21

9a

4a

9

HEAT-
CARRYING
OIL
LAYER

# FIG.6A

# FIG.6B

EP 2 489 973 B1

# F I G . 7

# FIG.8A

# FIG.8B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005188916 A
- US 2007079951 A1
- EP 1752728 A2
- JP 2008309344 A
- US 4086958 A
- US 4088183 A
- JP 2009235868 A